# FASCICULE DE BREVET EUROPEEN

(11) **EP 1 321 323 B1**
(45) Date de publication et mention de la délivrance du brevet: **03.05.2006**
(21) Numéro de dépôt: 02293178.6
(22) Date de dépôt: 20.12.2002
(51) Int. Cl.: B60H 1/00, G05D 7/01

(54) **Régulateur automatique de débit de fluide d'un conduit aller d'un circuit de fluide**
Automatischer Durchflussregler für die Vorlaufflüssigkeit in einem Flüssigkeitskreislauf
Automatic flow controller for the fluid in the in-conduct of a fluid circuit

(30) Priorité: 21.12.2001 FR 0116667
(43) Date de publication de la demande: 25.06.2003
(73) Titulaire: Trelleborg Automotive France, 44470 Carquefou (FR)
(72) Inventeur: Merour, Sylvain, 44120 Vertou (FR); Gaudiau, Ghislain, 44521 Oudon (FR)
(74) Mandataire: Fosse, Danièle

(56) Documents cités:
- US-A- 3 966 119
- US-A- 4 373 666
- US-A- 5 322 217
- US-A- 5 564 458

## Description

La présente invention concerne un régulateur automatique de débit de fluide d'un conduit aller d'un circuit de fluide, tel qu'un circuit de refroidissement et/ou de chauffage s'étendant notamment entre un moteur à combustion interne de véhicule et un dispositif de chauffage ou de refroidissement, ledit régulateur comportant une soupape logée au moins partiellement dans une conduite de dérivation reliant le conduit aller à un autre conduit, tel qu'un conduit retour dudit circuit.

Il existe de nombreux appareils, tels que des aérothermes, dont l'endommagement peut être provoqué par un débit d'alimentation en fluide trop élevé, ce débit générant une perforation des tubes de l'aérotherme. Ce problème se pose notamment pour les radiateurs de chauffage de véhicule reliés par l'intermédiaire d'un circuit de refroidissement et/ou de chauffage au moteur à combustion interne du véhicule, le débit de liquide passant dans le radiateur de chauffage étant directement fonction du débit de fluide provenant du moteur et transféré vers le radiateur de chauffage. Or, ce débit de fluide provenant du moteur peut varier dans une large plage en fonction du régime moteur. Ces fortes variations de débit ont amené certains constructeurs à intégrer, sur les circuits de refroidissement, un bipasse. Ce bipasse se présente sous forme d'une conduite de dérivation reliant le conduit aller et le conduit retour dudit circuit. Ce conduit de dérivation est dimensionné de telle façon que, à pleine charge, le débit passant dans l'aérotherme soit inférieur à une valeur de débit max. L'inconvénient majeur d'un tel conduit de dérivation est qu'il crée en permanence un débit de fuite quel que soit le régime moteur. A bas régime, une partie du fluide est court-circuitée à travers le conduit de dérivation, le débit passant dans l'aérotherme est alors diminué et l'efficacité de chauffage pour l'habitacle, directement fonction de ce débit, est affectée.

Pour pallier cet inconvénient, divers régulateurs ont été développés. Des modèles basiques du type de celui décrit dans le brevet US-A-5.322.217 permettent ainsi, lorsque le différentiel de pression entre conduit aller et conduit retour est supérieur à une valeur prédéterminée, l'ouverture du conduit de dérivation fermé au moyen d'une valve de type clapet chargée par ressort. Dans un tel régulateur, la section de passage du conduit aller demeure constante. De ce fait, des endommagements de l'aérotherme peuvent malgré tout être constatés lorsque le débit, en entrée du conduit aller, atteint des valeurs trop importantes et que la quantité de courant dérivé est insuffisante. Par ailleurs, un tel régulateur empêche un réglage fin des débits.

Une seconde génération d'appareils a également été développée. Celle-ci permet d'agir à la fois sur la section de passage du fluide dans la conduite de dérivation et sur la section de passage du fluide dans la conduite aller. Cette nouvelle génération nécessite donc la présence de deux organes d'obturation, l'un obturant le conduit de dérivation, l'autre le conduit aller, en particulier la section aval du conduit aller.

Toutefois, de tels dispositifs fonctionnement en tout ou rien et assurent une "régulation" discontinue car ils nécessitent un organe de commande rapporté pour leur fonctionnement ainsi qu'une source d'énergie externe. Par ailleurs, ils ne peuvent remplir un rôle de régulateur que si un capteur leur fournit une information relative au débit ou à la pression en entrée de circuit. En conséquence, la fonction de tels dispositifs est différente car ils ne peuvent exercer une fonction de régulation continue du débit. Ainsi, dans le document US-A-4.373.666, les organes d'obturation sont portés par deux éléments supports différenciés. L'un des organes d'obturation agit, au cours de son déplacement, sur l'autre organe d'obturation. Le déplacement de ce premier organe d'obturation est commandé par l'intermédiaire d'une membrane soumise à dépression. La mise en dépression de la cavité délimitée par la membrane génère une déformation de cette dernière et par suite, un entraînement en déplacement de l'organe d'obturation, ce premier organe d'obturation agissant sur le deuxième organe d'obturation. Il en résulte un ensemble extrêmement complexe où, à nouveau, une source d'énergie extérieure, en particulier une source de vide, est nécessaire pour le fonctionnement d'un tel ensemble. Par ailleurs, il est difficile dans ce cas d'avoir une corrélation de la variation des sections de passage de sorte que des réglages fins des débits ne peuvent être envisagés.

Dans le document US-A-5.564.458, il est décrit une soupape cadencée pour le dosage discontinu d'un débit volumique notamment du débit d'eau de refroidissement traversant un échangeur de chaleur d'un système de chauffage d'un véhicule. Dans ce cas, et de manière analogue à ce qui est décrit dans le brevet US-A-4.373.666, le déplacement de l'organe d'obturation du conduit aller est commandé au moyen d'un organe de commande électromagnétique, tel qu'un électro-aimant. Cet électro-aimant force, à cadence prédéterminée indépendamment des caractéristiques du fluide dans le circuit, l'organe d'obturation de la section aller à occuper une position de fermeture du conduit aller.
Dans une configuration particulière, un tel dispositif remplit le rôle d'un régulateur de débit agissant sous l'effet de la pression régnant à l'intérieur du conduit aller. Toutefois, la configuration des sections amont et aval de la conduite aller qui forment un coude entre elles génère un grand nombre de turbulences néfastes à l'écoulement du fluide.

Par ailleurs, dans le document US-A-5.564.458 de même que dans le document US-A-4.373.666, le conduit aller est coudé au moins deux fois et l'organe d'obturation du conduit aller est situé dans le débouché de la section amont du conduit aller dans la section aval de ce dernier. Cet organe d'obturation constitue ainsi en permanence un obstacle à l'écoulement du fluide dans la section aval du conduit aller, y compris lorsque cet organe d'obturation est censé occuper une position inactive. Il en résulte des turbulences néfastes à l'écoulement.

Il est par ailleurs connu d'intégrer une vanne pilotée pour contrôler le débit passant dans le radiateur de chauffage. La vanne doit être pilotée à partir d'une information telle que pression ou débit de liquide de refroidissement. Le système n'est donc pas autonome et fonctionne en fonction d'une information électrique, hydraulique ou pneumatique pour ouvrir et positionner la vanne afin de court-circuiter une partie du fluide se dirigeant vers l'aérotherme. L'inconvénient principal d'une vanne pilotée est le coût élevé du système.

Un but de la présente invention est donc de proposer un régulateur automatique de débit de fluide dont la conception entièrement mécanique permet l'obtention d'un régulateur autonome assurant une régulation continue du débit directement fonction du débit régnant dans la section amont du conduit aller.

Un autre but de la présente invention est de proposer un régulateur automatique de débit de fluide dont la conception permet, dans certaines conditions, de supprimer totalement la création d'un débit de fuite.

Un autre but de la présente invention est de proposer un régulateur automatique de débit de fluide dont la conception permet le fonctionnement de ce dernier sans retour d'information provenant d'un capteur de pression ou de débit de fluide de manière telle qu'aucune jonction électrique avec un autre composant n'est nécessaire.

A cet effet, l'invention a pour objet un régulateur automatique de débit de fluide d'un circuit de fluide, tel qu'un circuit de refroidissement et/ou de chauffage, s'étendant notamment entre un moteur à combustion interne de véhicule et un dispositif de chauffage ou de refroidissement, ledit régulateur au moins partiellement dans ledit conduit de dérivation comprenant un conduit aller, un conduit retour, et un conduit de dérivation reliant le conduit aller au conduit retour, le régulateur comprenant en outre une soupape logée ladite soupape comportant au moins deux organes d'obturation agencés pour obturer au moins partiellement l'un le conduit de dérivation, l'autre la section du conduit aller en aval du conduit de dérivation, les organes d'obturations solidaires en déplacement du corps de soupape, sont, en amont du conduit aller, rappelés, généralement au moyen d'un organe de rappel élastique, dans une position prédéterminée et sont mobiles simultanément sous l'effet exclusif d'une pression dans la section amont du conduit aller supérieure à la pression seuil prédéterminée, lesdits organes d'obturation provoquant, concomitamment au cours de leur déplacement, l'un la création ou l'augmentation de la section de passage de fluide dans le conduit de dérivation, l'autre une réduction de la section de passage de fluide dans la section aval du conduit aller, ledit régulateur étant agencé de sorte que, en deçà d'une pression seuil prédéterminée dans la section amont du conduit aller, l'organe d'obturation de la section du conduit aller en aval du conduit de dérivation est logé au moins partiellement, de préférence totalement, dans un palie de la paroi de la conduite aller formée par un renfoncement de ladite paroi, de manière à libérer au moins partiellement la section du passage dudit conduit aller.

Grâce à la conception d'un tel régulateur, le déplacement des organes d'obturation s'effectue exclusivement sous l'effet de la pression régnant à l'intérieur du circuit et en particulier dans la section amont du conduit aller. Il en résulte la possibilité d'obtenir une corrélation parfaite entre les sections de passage du conduit de dérivation et de la portion aval du conduit aller. Le système ne fonctionne ainsi pas en tout ou rien mais peut permettre d'obtenir des réglages très fins des débits tout en garantissant un maintien, dans la section aval du conduit aller, d'une valeur de débit inférieure à celle susceptible d'entraîner un endommagement de l'aérotherme.

Une telle construction permet ainsi d'augmenter les débits, en particulier dans la section aval du conduit aller, sans pour autant augmenter l'encombrement de l'ensemble du régulateur. En outre, une telle solution permet de limiter les turbulences générées au sein de l'écoulement de fluide.

Enfin, une telle solution permet, à volonté, d'agir sur la section aval ou sur la section amont du conduit aller en fonction de la construction retenue. Dans les exemples représentés, comme cela sera décrit ci-après, il a été préféré une solution dans laquelle on agit d'abord sur la section aval du conduit aller avant d'agir sur la section amont. Bien évidemment, l'inverse aurait également pu être envisagé. L'action sur la section aval de l'organe d'obturation peut s'effectuer dès ouverture du conduit de dérivation ou au-delà d'une section de passage dans le conduit de dérivation prédéterminée.

L'invention sera bien comprise à la lecture de la description suivante d'exemples de réalisation, en référence aux dessins annexés dans lesquels :
la figure 1 représente une vue en coupe du régulateur de débit dans une position dans laquelle la pression régnant à l'intérieur de la section amont du conduit aller est inférieure à une pression seuil prédéterminée;
la figure 2 représente une vue en coupe d'un régulateur de débit dans une position dans laquelle la pression seuil régnant à l'intérieur de la section amont du conduit aller est supérieure à une pression seuil prédéterminée ;
la figure 3 représente, sous forme d'un graphique, l'évolution des sections de passage de la section aval du conduit aller et du conduit de dérivation en fonction de la position de la soupape ;

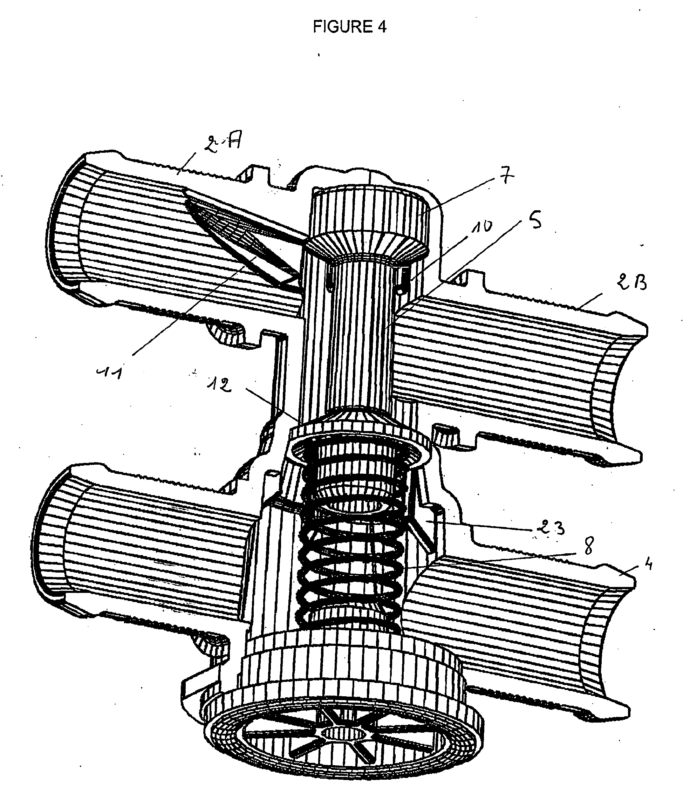

la figure 4 représente une vue partielle en perspective d'un régulateur automatique de débit conforme à l'invention, la face avant ayant été enlevée ;
la figure 5 représente une vue en coupe d'un autre mode de réalisation d'un régulateur de débit conforme à l'invention et
la figure 6 représente l'incorporation d'un régulateur automatique de débit conforme à l'invention dans un circuit de refroidissement ou de chauffage s'étendant entre un moteur à combustion interne du véhicule et un dispositif de chauffage ou de refroidissement dudit véhicule.

Comme mentionné ci-dessus, le régulateur 1 automatique, objet de l'invention, permet la régulation du débit de fluide d'un conduit aller 2 d'un circuit de fluide, tel qu'un circuit de refroidissement et/ou de chauffage s'étendant notamment entre un moteur à combustion interne de véhicule et un dispositif de chauffage ou de refroidissement. Ce régulateur 1 comporte une soupape (5) logée au moins partiellement dans une conduite 3 de dérivation reliant le conduit aller 2 à un autre conduit 4, tel qu'un conduit retour dudit circuit et fait saillie dans le conduit aller 2 dudit circuit. Cette soupape 5 comporte au moins deux organes 6, 7 d'obturation solidaires en déplacement du corps de soupape 5 et agencés pour obturer au moins partiellement l'un, représenté en 6 aux figures, le conduit 3 de dérivation, l'autre représenté en 7 aux figures, au moins la section 2A du conduit aller 2 en aval du conduit 3 de dérivation. Ces organes 6, 7 d'obturation, rappelés dans une position prédéterminée en deçà d'une pression seuil prédéterminée dans la section amont 2B du conduit aller 2, sont mobiles simultanément sous l'effet exclusif d'une pression dans la section amont 2B du conduit aller 2 supérieure à ladite pression seuil prédéterminée. Ces organes 6, 7 d'obturation provoquent, concomitamment au cours de leur déplacement, l'un, représenté en 6 aux figures, la création ou l'augmentation de la section S1 de passage de fluide dans le conduit 3 de dérivation, l'autre, représenté en 7 aux figures, une réduction de la section S2 de passage de fluide dans la section aval 2A du conduit aller 2 et ce uniquement sous l'effet de la pression régnant à l'intérieur du circuit.

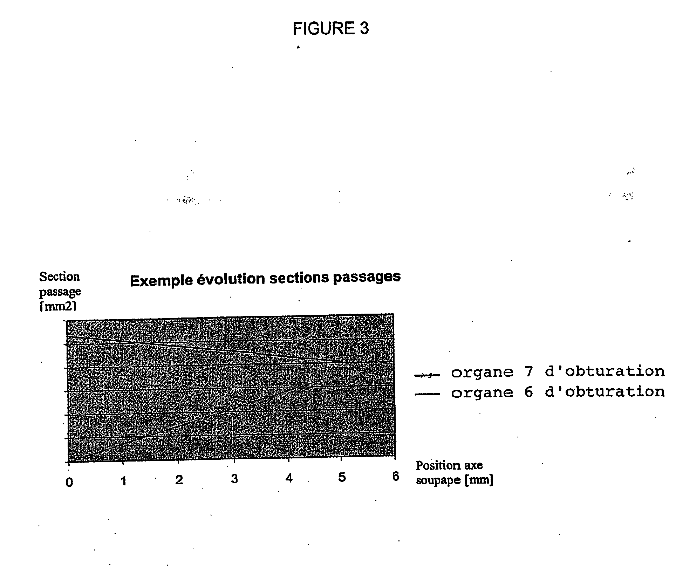

Comme l'illustrent les figures, l'organe 6 d'obturation du conduit 3 de dérivation obture totalement ledit conduit 3 lorsque la pression dans le conduit aller 2 est inférieure à une pression seuil prédéterminée. Cette section S1 de passage délimitée par la coopération de l'organe 6 d'obturation avec le conduit 3 de dérivation croît au cours du déplacement de la soupape 5 sous l'effet d'une augmentation de la pression dans la section amont 2B du conduit aller 2. La section S2 de passage de la section aval 2A du conduit aller 2 décroît quant à elle au cours du déplacement de la soupape 5 sous l'effet d'une augmentation de la pression dans la section amont 2B du conduit aller 2. Ainsi, l'augmentation de la section S1 de passage du conduit 3 de dérivation et la réduction de la section S2 de passage de la section aval 2A du conduit aller 2 sont directement fonction et exclusivement fonction de la pression régnant dans la section amont 2B du conduit aller 2, ces sections S1, S2 de passage augmentant ou respectivement diminuant suivant une variation de préférence linéaire, comme l'illustre la figure 3 dans laquelle la courbe supérieure représente la réduction de la section S2 de passage de la section 2A aval du conduit aller 2 sous l'effet d'une augmentation de la pression tandis que la courbe inférieure représente l'augmentation de la section S1 de passage dans le conduit 3 de dérivation au cours du déplacement de la soupape 5 sous l'effet d'une augmentation de la pression dans la section amont 2B du conduit aller 2.

Dans ce graphique, représenté à la figure 3, l'abscisse représente la position de l'axe de soupape exprimée en mm tandis que l'ordonnée représente l'évolution des sections de passage exprimées en mm². Ces sections S1, S2 de passage du conduit 3 de dérivation et de la portion aval 2A du conduit aller 2 sont choisies en corrélation de manière à maintenir dans la section aval 2A du conduit aller 2 une valeur de débit inférieure à une valeur seuil prédéterminée indépendamment du débit régnant dans la section amont 2B du conduit aller 2 de manière à ne pas endommager le dispositif, tel qu'un dispositif de chauffage alimenté par ledit conduit 2.

La soupape 5 affecte ici, dans les exemples représentés, la forme générale d'un axe coaxial au conduit 3 de dérivation. Cet axe, chargé par un ressort 8 de compression, est rappelé dans une position dans laquelle l'une de ses extrémités est logée dans un palier 9 ménagé dans la paroi du conduit aller 2. Le positionnement de ce palier 9, constitué par un renforcement de la paroi du conduit aller située en regard du débouché du conduit aller dans le conduit de dérivation, permet de libérer au moins partiellement la zone de communication entre section amont 2B et section aval 2A du conduit aller. En effet, ce palier 9 est destiné à loger l'organe 7 d'obturation de la section du conduit aller en aval du conduit de dérivation. Ainsi, en position inactive, cet organe 7 d'obturation ne constitue pas un obstacle à l'écoulement du fluide de la section amont vers la section aval dans le conduit aller. Il ne réduit aucunement la section de passage du conduit aller, comme cela peut être le cas dans les solutions de l'état de la technique. Il permet malgré tout de disposer d'un régulateur dont les conduites peuvent être entièrement fermées, aucune partie ne faisant saillie à l'extérieur desdits conduits et étant mobile par rapport à ces derniers comme cela peut être le cas dans l'état de la technique.

Dans les exemples représentés, la soupape 5 est chargée par un ressort 8 hélicoïdal enroulé d'une part autour de l'axe de soupape 5, d'autre part autour de l'axe d'un moyeu 14 porté par un bouchon 15 de fermeture de la conduite 3 de canalisation. Ce bouchon 15 s'étend en regard du palier 9. L'extrémité d'axe logée dans le palier 9 présente un diamètre supérieur au reste du corps de soupape et constitue une partie cylindrique pleine ou évidée formant l'organe 7 d'obturation de la section aval 2A du conduit aller 2 et éventuellement de la section amont 2B dudit conduit. Cette section aval 2A du conduit aller 2 est légèrement décalée axialement par rapport à l'axe de la section amont 2B du conduit aller 2 de manière à former, dans la paroi du conduit aller 2, un décrochement 10 situé au niveau du débouché du palier 9 dans la conduite aller autorise, au cours du déplacement de la soupape 5, l'obturateur 7 du conduit aller 2 à obturer au moins partiellement une partie de la section aval 2A du conduit aller 2 avant de pénétrer dans la section amont 2B du conduit aller 2. A cet effet, la section aval 2A du conduit aller 2 présente, au droit de l'obturateur 7 et s'étendant sensiblement sur une moitié de la section aval 2A du conduit aller 2, une partie 11 tronconique dont la petite base est du côté de l'obturateur 7. Cette partie 11 tronconique est, lors d'un déplacement de la soupape 5, obturée totalement par l'organe 7 d'obturation du conduit aller 2 avant que ce dernier ne pénètre dans la section amont 2B dudit conduit aller 2.

L'organe 6 d'obturation du conduit 3 de dérivation est quant à lui constitué d'une portée 6A, de préférence conique, ménagée sur le corps de soupape 5. Cette portée 6A conique coopère avec un siège 12 d'allure également conique ménagé dans le conduit 3 de dérivation pour obturer le conduit 3 en deçà d'une pression prédéterminée dans la section amont 2B du conduit aller 2. Cette portée 6A conique de l'organe d'obturation 6 est prolongée par une portée 6B cylindrique coopérant, au cours du déplacement de la soupape 5, avec des nervures 23 longitudinales de guidage ménagées sur la paroi intérieure du conduit 3 de dérivation.

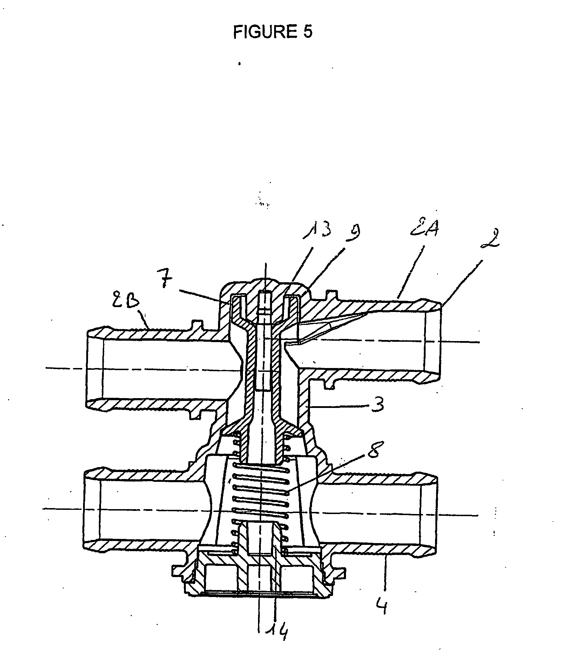

Dans une variante représentée à la figure 5, le corps de soupape 5 est un corps creux logeant un axe 13 de guidage emmanché dans le palier 9 de la paroi du conduit aller 2, ce palier 9 affectant dans ce cas une forme annulaire.

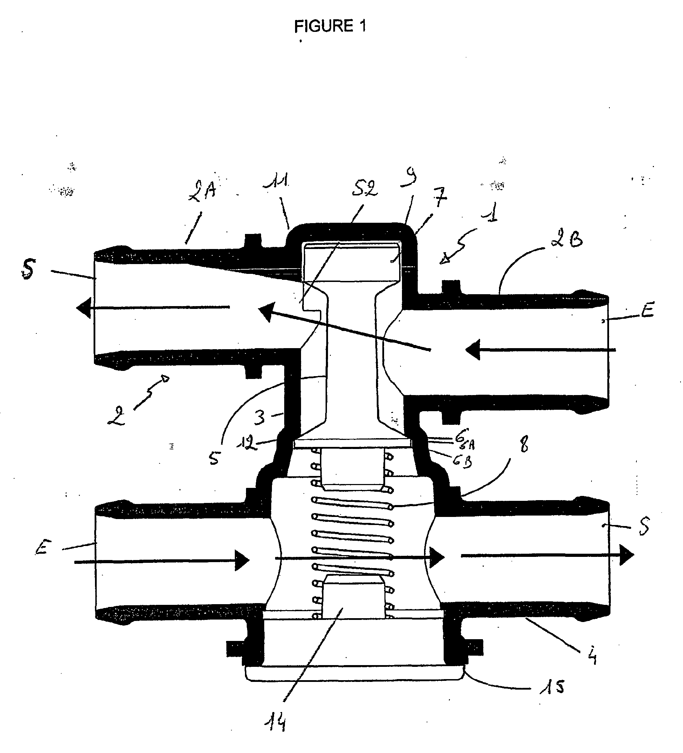

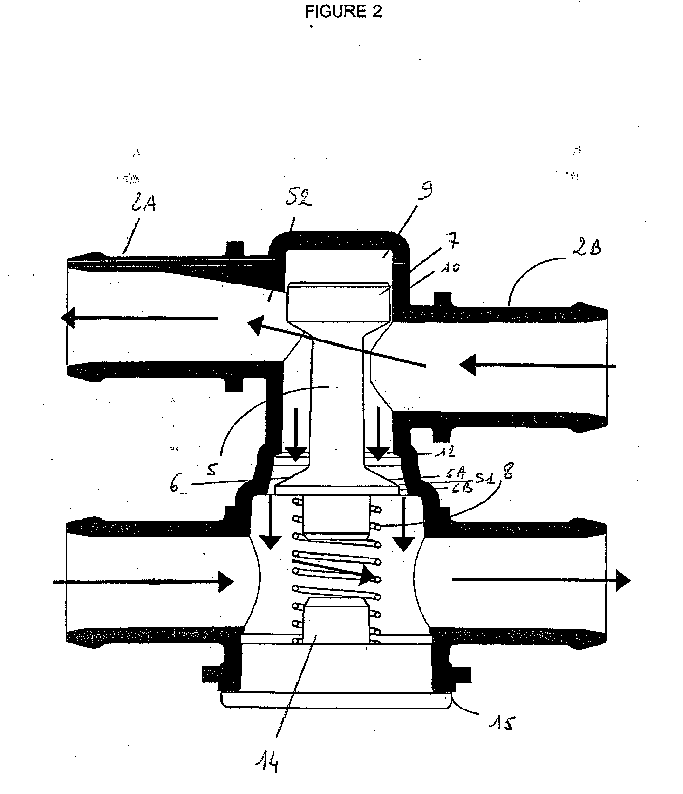

Le fonctionnement des soupapes 5, représentées aux figures 1 et 2 ou 5, est analogue. On note que, dans la figure 5, la partie 7 cylindrique du corps de soupape 5, destinée à former l'organe 7 d'obturation de la section 2B aval du conduit aller 2, est évidée alors que, dans les exemples représentés aux figures 1 et 2, cette partie cylindrique 7 est pleine.

Dans le régulateur 1 décrit ci-dessus, seules deux pièces peuvent se mettre en mouvement, à savoir le ressort 8 de compression et l'axe de soupape 5.

Dans le mode de réalisation préféré de l'invention, la soupape 5 est montée, en particulier pré-montée, à l'intérieur d'un corps comportant une conduite 3 de dérivation, une entrée E de conduit aller 2, une sortie S de conduit aller 2, une entrée E de conduit retour 4 et une sortie (S) de conduit retour 4, l'ensemble étant destiné à être inséré sur les conduites aller et retour d'un circuit de circulation de fluide, tel qu'un circuit de refroidissement et/ou de chauffage s'étendant notamment entre un moteur à combustion interne de véhicule et un dispositif de chauffage ou de refroidissement, de manière à constituer un régulateur prêt à monter.

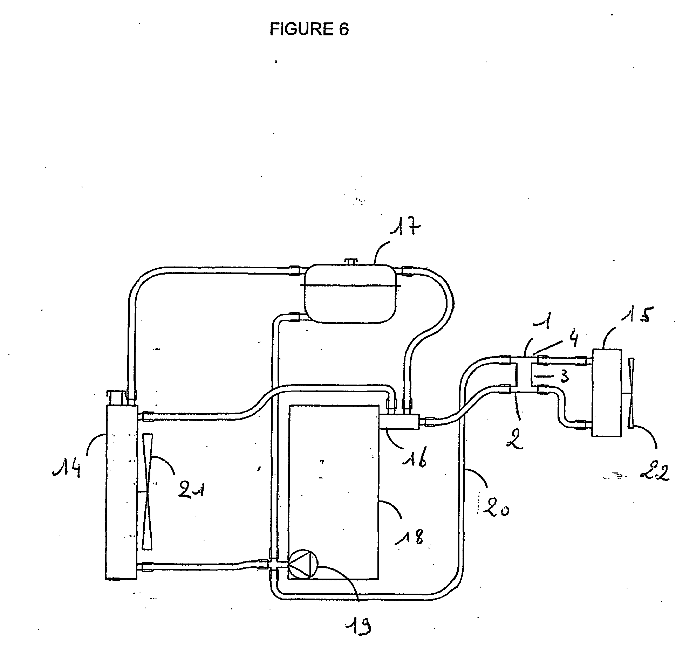

Un tel circuit peut être conforme à celui représenté à la figure 6. Ce circuit comporte de manière classique un radiateur 14, un aérotherme 15 pour le chauffage de l'habitacle, un boîtier de sortie d'eau 16 intégrant un thermostat, un réservoir de dégazage 17, un moteur de combustion interne 18, une pompe 19 à eau de circulation, des durits 20 de circulation et les moto-ventilateurs du radiateur et de l'aérotherme représentés respectivement en 21 et 22.

La boucle de refroidissement et/ou de chauffage du véhicule automobile intègre le régulateur 1 de débit entre le boîtier 16 de sortie d'eau et l'aérotherme 15. Le corps du régulateur 1 de débit est branché en parallèle de l'aérotherme 15. Le corps du régulateur 1 de débit est connecté au circuit d'eau par l'intermédiaire de quatre durits 20 avec une première durit qui permet de relier le boîtier 16 de sortie d'eau à l'entrée E de la conduite amont 2B du conduit aller 2 du régulateur 1 de débit, une deuxième durit qui relie la sortie S de la section aval 2A du conduit aller 2 du régulateur 1 de débit à l'entrée de l'aérotherme 15, une troisième durit qui relie la sortie de l'aérotherme 15 à l'entrée E de la section amont du conduit 4 du régulateur 1 de débit et une quatrième durit qui relie la sortie S de la conduite 4 du régulateur 1 de débit à la pompe à eau 19 ou à la durit de sortie du radiateur 14 de refroidissement du moteur. Dans un autre mode de réalisation non représenté, le régulateur peut être intégré directement au boîtier 16 de sortie d'eau ou à l'aérotherme 15.

Du point de vue de fonctionnement, le principe de l'invention est le suivant. Le ressort de compression 8, qui est précontraint à l'intérieur du corps du régulateur 1 de débit, est dimensionné de façon à maintenir la soupape 5 en appui à l'intérieur du palier 9 de la conduite aller 2 jusqu'à une valeur de débit correspondant à une pression seuil prédéterminée. Pour un débit inférieur au débit seuil, ou respectivement une pression inférieure à la pression seuil, tout le fluide arrivant dans le régulateur de débit 1 est dirigé vers l'aérotherme 15. Le régulateur de débit est donc dans une position correspondant à celle représentée à la figure 1 dans laquelle le conduit 3 de dérivation est fermé par l'organe 6 d'obturation. Au-delà de cette valeur de pression seuil prédéterminée, le fluide arrivant dans le régulateur 1 de débit exerce une pression suffisante pour modifier la position de la soupape 5 et libérer un passage entre la portée conique de l'organe 6 d'obturation et le siège 12 ménagé dans la conduite 3 de dérivation. Une partie du fluide se dirige vers l'aérotherme 15 et une autre partie du fluide passe à travers la conduite de dérivation 3 en s'écoulant entre la soupape 5 et la paroi intérieure de la conduite 3 de dérivation. Le régulateur 1 de débit est donc en position soupape ouverte. Si la pression de fluide augmente, la soupape 5 comprime davantage le ressort 8 de rappel et la section de passage S1 du régulateur 1 de débit entre la soupape 5 et le conduit 3 de dérivation continue d'augmenter. Cette section de passage peut évoluer selon une loi linéaire ou autre comme mentionné ci-dessus. Lorsque l'axe de soupape 5 se déplace du fait de la pression exercée par le fluide sur la soupape 5, la partie de l'axe de soupape 5 s'étendant à l'inférieur du conduit aller joue le rôle d'obturateur en diminuant au moins la section de passage de la section aval 2A du conduit 2, cette section menant à l'aérotherme 1. Cette section de passage peut également diminuer selon une loi linéaire ou autre. Le dimensionnement des évolutions de section de passage au niveau des organes d'obturation 6 et 7 permet de ne pas dépasser un débit maximum déterminé dans l'aérotherme 15 en fonction du débit en entrée du régulateur 1 de débit et provenant du boîtier 16 de sortie d'eau moteur.

Les composants du régulateur 1 de débit peuvent avantageusement être réalisés par des techniques d'injection. De préférence, le ressort 8 de compression est en matière inox pour éviter les problèmes de corrosion.

On note que, dans les configurations représentées, un seul bouchon 15 de fermeture de la conduite 3 de canalisation est nécessaire. Il en résulte un nombre d'opérations d'assemblage faible et donc un gain économique. Du point de vue de l'encombrement, on constate également, en raison de l'intégration du palier 9 dans la paroi de la section aller 2 et de sa coopération avec l'organe 7 d'obturation constitué d'une partie cylindrique, un faible encombrement de l'ensemble.

Dans l'exemple représenté à la figure 5, le guidage de l'axe de la soupape 5 s'effectue par l'intermédiaire d'un axe 13 de guidage rapporté. Cet axe 13 de guidage, de préférence en métal, peut être monté en force dans le palier 9 ménagé dans la conduite aller 2 amont du régulateur. Le bouchon 15 de fermeture de la conduite 3 de canalisation peut éventuellement intégrer un joint d'étanchéité et être maintenu par une technique de clipsage à la paroi à laquelle il est fixé. Il est également possible de réaliser cette liaison par l'intermédiaire de vis de liaison ou par une technique de sertissage ou par collage. L'orientation préférentielle du régulateur 1 de débit dans l'environnement moteur est celle dans laquelle la soupape 5 est placée en position verticale et le bouchon 15 de fermeture de la conduite 3 de canalisation est orienté vers le bas. L'intérêt de cette position est d'éviter l'accumulation de pollution interne au circuit de refroidissement au niveau de la zone de guidage entre l'organe 7 d'obturation de l'axe 5 de soupape et le palier 9 de la conduite 2 aller.

Ce régulateur 1 de débit, se présentant sous forme d'un ensemble prêt à monter, peut également être raccordé directement au boîtier 16 de sortie d'eau ou au dispositif 15 de chauffage de manière à limiter le nombre de connections à réaliser. Bien évidemment, ce régulateur 1 de débit pourra en outre incorporer une vis de purge pour le circuit de refroidissement dans le cas où ce régulateur 1 de débit se situe dans un point haut du circuit de refroidissement. Il est également possible d'intégrer, en partie haute du régulateur 1 de débit, une pipette de raccordement connectée au bocal 17 de refroidissement par l'intermédiaire d'une durit, cette pipette assurant le dégazage du circuit de refroidissement dans le cas où le régulateur 1 de débit se situe dans un point haut du circuit de refroidissement. Il est encore possible d'intégrer un actionneur thermoélectrique à la section du corps du régulateur 1 de débit qui se raccorde à l'entrée de l'aérotherme 15. L'actionneur thermoélectrique, commandé par un organe de commande, permet de chauffer le liquide de refroidissement afin d'atteindre une température de consigne pour le fluide de refroidissement passant dans l'aérotherme 15. Il est également possible d'intégrer des connectiques rapides au niveau des entrées E et S du régulateur 1 prêt à monter afin de pouvoir connecter rapidement ce régulateur 1 à l'aérotherme 15 ou au boîtier 16 de sortie d'eau.

Bien que les applications principales de ce régulateur concernent les circuits de refroidissement de moteurs à combustion interne de véhicules automobiles, ces régulateurs peuvent s'appliquer de manière analogue à toute autre application nécessitant un système autonome de régulation de débit de fluide à travers une pièce où circule ledit fluide.

## Revendications

1. Régulateur (1) automatique de débit de fluide d'un circuit de fluide, tel qu'un circuit de refroidissement et/ou de chauffage, s'étendant notamment entre un moteur à combustion interne de véhicule et un dispositif de chauffage ou de refroidissement, ledit régulateur (1) comprenant un conduit aller (2), un conduit retour (4) et un conduit de dérivation (3) reliant le conduit aller (2) au conduit retour (4), le régulateur (1) comprenant en outre une soupape logée au moins partiellement dans le conduit (3) de dérivation ladite soupape (5) comportant au moins deux organes (6, 7) d'obturation agencés pour obturer au moins partiellement l'un (6) le conduit (3) de dérivation, l'autre (7) la section (2A) du conduit aller en aval du conduit (3) de dérivation, les organes d'obturations (6, 7) solidaires en déplacement du corps de soupape (5), sont rappelés, généralement au moyen d'un organe (8) de rappel élastique, dans une position prédéterminée et sont mobiles simultanément sous l'effet exclusif d'une pression dans la section amont (2B) du conduit aller (2) supérieure à la pression seuil prédéterminée, lesdits organes (6, 7) d'obturation provoquant, concomitamment au cours de leur déplacement, l'un (6) la création ou l'augmentation de la section (S1) de passage de fluide dans le conduit (3) de dérivation, l'autre (7) une réduction de la section (S2) de passage de fluide dans la section aval (2A) du conduit aller (2),
**caractérisé en ce que**, en deçà d'une pression seuil prédéterminée dans la section amont (2B) du conduit aller (2), l'organe (7) d'obturation de la section (2A) du conduit aller (2) en aval du conduit (3) de dérivation est logé au moins partiellement, de préférence totalement, dans un palier (9) de la paroi de la conduite aller (2) formée par un renfoncement de ladite paroi, de manière à libérer au moins partiellement la section du passage dudit conduit aller.

2. Régulateur (1) selon la revendication 1,
**caractérisé en ce que** la soupape (5) affecte la forme générale d'un axe coaxial au conduit (3) de dérivation, cet axe, chargé par un ressort (8) de compression, étant rappelé dans une position dans laquelle l'une de ses extrémités est logée dans un palier (9) ménagé dans la paroi du conduit aller (2).

3. Régulateur (1) selon la revendication 2,
**caractérisé en ce que** l'extrémité d'axe logée dans ledit palier (9) présente un diamètre supérieur au reste du corps de soupape et constitue une partie cylindrique formant l'organe (7) d'obturation de la section aval (2A) du conduit aller (2).

4. Régulateur (1) selon l'une des revendications 1 à 3,
**caractérisé en ce que** l'organe (6) d'obturation du conduit (3) de dérivation obture totalement ledit conduit (3) lorsque la pression dans le conduit aller (2) est inférieure à ladite pression seuil prédéterminée.

5. Régulateur (1) selon l'une des revendications 1 à 4,
**caractérisé en ce que** la section (S1) de passage, délimitée par la coopération de l'organe (6) d'obturation avec le conduit (3) de dérivation, croît au cours du déplacement de la soupape (5) sous l'effet d'une augmentation de la pression dans la section amont (2B) du conduit aller (2).

6. Régulateur (1) selon l'une des revendications 1 à 5,
**caractérisé en ce que** l'augmentation de la section (S1) de passage du conduit (3) de dérivation et la réduction de la section (S2) de passage de la section aval (2A) du conduit aller (2) sont directement fonction de la pression régnant dans la section amont (2B) du conduit aller (2), lesdites sections (S1, S2) de passage augmentant ou respectivement diminuant suivant une variation de préférence linéaire.

7. Régulateur (1) selon l'une des revendications 1 à 6,
**caractérisé en ce que** les sections (S1, S2) de passage du conduit (3) de dérivation et de la portion aval (2A) du conduit aller (2) sont choisies en corrélation de manière à maintenir dans la section aval (2A) du conduit aller (2) une valeur de débit inférieure à une valeur seuil prédéterminée indépendamment du débit régnant dans la section amont (2B) du conduit aller (2).

8. Régulateur (1) selon l'une des revendications 1 à 7,
**caractérisé en ce que** la section aval (2A) du conduit aller (2) est légèrement décalée axialement par rapport à l'axe de la section amont (2B) du conduit aller (2) de manière à former, dans la paroi du conduit aller (2), un décrochement (10) autorisant, au cours du déplacement de la soupape (5), l'obturateur (7) du conduit aller (2) à obturer au moins partiellement une partie de la section aval (2A) du conduit aller (2) avant de pénétrer dans la section amont (2B) du conduit aller (2).

9. Régulateur (1) selon la revendication 8,
**caractérisé en ce que** la section aval (2A) du conduit aller (2) présente, au droit de l'obturateur (7) et s'étendant sensiblement sur une moitié de la section aval (2A) du conduit aller (2), une partie (11) tronconique dont la petite base est du côté de l'obturateur (7), cette partie (11) tronconique étant, lors d'un déplacement de la soupape (5), obturée totalement par l'organe (7) d'obturation du conduit aller (2) avant que ce dernier ne pénètre dans la section amont (2B) dudit conduit aller (2).

10. Régulateur (1) selon l'une des revendications 1 à 9,
**caractérisé en ce que** l'organe (6) d'obturation du conduit (3) de dérivation est constitué d'une portée (6A), de préférence conique, ménagée sur le corps de soupape (5), cette portée (6A) conique coopérant avec un siège (12) ménagé dans le conduit (3) de dérivation pour obturer ledit conduit (3) en deçà d'une pression prédéterminée dans la section amont (2B) du conduit aller (2).

11. Régulateur (1) selon la revendication 10,
**caractérisé en ce que** la portée (6A) conique de l'organe d'obturation (6) est prolongée par une portée (6B) cylindrique coopérant, au cours du déplacement de la soupape (5), avec des nervures (23) longitudinales de guidage ménagées sur la paroi intérieure du conduit (3) de dérivation.

12. Régulateur (1) selon l'une des revendications 1 à 11,
**caractérisé en ce que** le corps de soupape (5) est un corps creux logeant un axe (13) de guidage emmanché dans le palier (9) de la paroi du conduit aller (2).

13. Régulateur (1) selon l'une des revendications 1 à 12,
**caractérisé en ce que** la soupape (5) est chargée par un ressort (8) hélicoïdal enroulé d'une part autour de l'axe de soupape (5), d'autre part autour de l'axe d'un moyeu (14) porté par un bouchon (15) de fermeture de la conduite (3) de canalisation.

14. Régulateur (1) selon l'une des revendications 1 à 13,
**caractérisé en ce que** la soupape (5) est montée à l'intérieur d'un corps comportant ledit conduit (3) de dérivation, une entrée (E) dudit conduit aller (2), une sortie (S) dudit conduit aller (2), une entrée (E) dudit conduit retour (4) et une sortie (S) dudit conduit retour (4), l'ensemble étant destiné à être inséré sur les conduites aller et retour d'un circuit de circulation de fluide, tel qu'un circuit de refroidissement et/ou de chauffage s'étendant notamment entre un moteur à combustion interne de véhicule et un dispositif de chauffage ou de refroidissement, de manière à constituer un régulateur prêt à monter.

## Patentansprüche

1. Automatischer Flüssigkeits-Durchflussregler (1) eines Flüssigkeitskreislaufs, wie zum Beispiel ein Kühl- und/oder Heizkreislauf, der sich insbesondere zwischen einem Verbrennungsmotor in einem Fahrzeug und einer Heiz- oder Kühlvorrichtung ausdehnt, wobei der Regler (1) eine Vorlaufleitung (2), eine Rücklaufleitung (4) und eine Abzweigleitung (3) umfasst, weiche die Vorlaufleitung (2) mit der Rücklaufleitung (4) verbindet, wobei der Regler (1) außerdem ein Ventil umfasst, das sich zumindest teilweise in der Abzweigleitung (3) befindet, wobei das Ventil (5) mindestens zwei Absperrorgane (6, 7) umfasst die so angeordnet sind, dass zumindest teilweise ein Absperrorgan (6) die Abzweigleitung (3) absperrt und das andere (7) den Abschnitt (2A) der Vorlaufleitung, unterhalb der Abzweigleitung (3), wobei die fest verbundenen Absperrorgane (6, 7) bei der Verschiebung des Ventilkörpers (5), im Allgemeinen mit Hilfe eines elastischen Rückstellorgans (8), in eine vorgegebene Position zurückgestellt werden und gleichzeitig in dem oberhalb befindlichen Abschnitt (2B) der Vorlaufleitung (2) beweglich sind, unter der ausschließlichen Wirkung eines Drucks in dem oberen Abschnitt (2B) der Vorlaufleitung (2), der höher ist, als der vorgegebene Schwellendruck, wobei die Absperrorgane (6,7) gleichzeitig während ihrer Verschiebung die Bildung oder Vergrößerung des Strömungsquerschnitts (S1) der Flüssigkeit in der Abzweigleitung (3) durch das eine Absperrorgan (6) oder eine Verkleinerung des Strömungsquerschnitts (S2) der Flüssigkeit in dem unteren Abschnitt (2A) der Vorlaufleitung (2) durch das andere Absperrorgan (7) herbeiführen, **dadurch gekennzeichnet dass** unter einem vorgegebenen. Schwellendruck in dem oberen Abschnitt (28) der Vorlaufleitung (2) sich das Absperrorgan (7) des Abschnitts (2A) der Vorlaufleitung (2) unterhalb der Abzweigleitung (3) zumindest teilweise, vorzugsweise vollständig, in einem Lager (9) der Wand der Vorlaufleitung (2), die von einer Vertiefung der Wand gebildet wird, befindet und zwar so, dass zumindest teilweise der Strömungsquerschnitt der Vorlaufleitung freigegeben wird.

2. Regler (1) gemäß Anspruch 1, **dadurch gekennzeichnet, dass** das Ventil (5) die allgemeine Form einer koaxialen Achse der Abzweigleitung (3) vorgibt, wobei diese Achse, die von einer Druckfeder (8) belastet wird, in einer Position zurückgestellt wird, in der eines ihrer Enden sich in einem Lager (9) befindet, das in der Wand der Vorlaufleitung (2) angeordnet ist.

3. Regler (1) gemäß Anspruch 2, **dadurch gekennzeichnet, dass** das Achsenende, das sich in dem genannten Lager (9) befindet, einen Durchmesser aufweist, der größer ist, als der Rest des Ventilkörpers und einen zylindrischen Teil bildet, der das Absperrorgan (7) des unteren Abschnitts (2A) der Vorlaufleitung (2) bildet.

4. Regler (1) gemäß einem der Ansprüche 1 bis 3, **dadurch gekennzeichnet, dass** das Absperrorgan (6) der Abzweigleitung (3) die genannte Leitung (3) vollkommen absperrt, wenn der Druck in der Vorlaufleitung (2) unter dem vorgegebenen Schwellendruck liegt.

5. Regler (1) gemäß einem der Ansprüche 1 bis 4, **dadurch gekennzeichnet, dass** der Strömungsquerschnitt (S1), der von dem Zusammenspiel des Absperrorgans (6) mit der Abzweigleitung (3) begrenzt wird, während der Verschiebung des Ventils (5) unter der Wirkung einer Druckerhöhung in dem oberen Abschnitt (2B) der besagten Vorlaufleitung (2) zunimmt.

6. Regler (1) gemäß einem der Ansprüche 1 bis 5, **dadurch gekennzeichnet, dass** die Vergrößerung des Strömungsquerschnitts (S1) der Abzweigleitung (3) und die Verkleinerung des Strömungsquerschnitts (S2) des unteren Abschnitts (2A) der Vorlaufleitung (2) direkt von dem Druck abhängen, der in dem oberen Abschnitt (2B) der Vorlaufleitung (2) herrscht, wobei die genannten Strömungsquerschnitte (S1, S2) gemäß einer vorzugsweise linearen Veränderung zunehmen beziehungsweise abnehmen.

7. Regler (1) gemäß einem der Ansprüche 1 bis 6, **dadurch gekennzeichnet, dass** die Strömungsquerschnitte (S l, S2) der Abzweigleitung (3) und des unteren Teils (2A) der Vorlaufleitung (2) entsprechend ausgewählt wurden und zwar so, dass in dem unteren Abschnitt (2A) der Vorlaufleitung (2) ein Durchflusswert aufrechterhalten wird, der unter einem vorgegebenen Schwellenwert liegt, unabhängig von der Durchflussmenge, die in dem oberen Abschnitt (2B) der Vorlaufleitung (2) herrscht.

8. Regler (1) gemäß einem der Ansprüche 1 bis 7, **dadurch gekennzeichnet, dass** der untere Abschnitt (2A) der Vorlaufleitung (2) im Vergleich zu der Achse des oberen Abschnitts (2B) der Vorlaufleitung (2) leicht axial versetzt ist und zwar so, dass er in der Wand der Vorlaufleitung (2) einen Absatz (10) bildet, der dem Absperrorgan (7) der Vorlaufleitung (2) während der Verschiebung des Ventils (5) ermöglicht, zumindest teilweise einen Teil des unteren Abschnitts (2A) der Vorlaufleitung (2), vor Eindringen in den oberen Abschnitt (2B) der Vorlaufleitung (2), abzusperren.

9. Regler (1) gemäß Anspruch 8, **dadurch gekennzeichnet, dass** der untere Abschnitt (2A) der Vorlaufleitung (2) auf der rechten Seite des Absperrorgans (7) einen kegelstumpfförmigen Teil (11) aufweist, der sich deutlich auf einer Hälfte des unteren Abschnitts (2A) der Vorlaufleitung (2) erstreckt und dessen kleine Basis sich auf der Seite des Absperrorgans (7) befindet, wobei dieser kegelstumpfförmige Teil (11) während einer Verschiebung des Ventils (5) vollkommen von dem Absperrorgan (7) der Vorlaufleitung (2) abgesperrt wird, bevor letzteres in den oberen Abschnitt (2B) der genannten Vorlaufleitung (2) eindringt.

10. Regler (1) gemäß einein der Ansprüche 1 bis 9, **dadurch gekennzeichnet, dass** das Absperrorgan (6) der Abzweigleitung (3) aus einem vorzugsweise konischen Zapfen (6A) besteht, der auf dem Ventilkörper (5) angeordnet ist, wobei dieser konische Zapfen (6A) mit einer Aufnahme (12) zusammenarbeitet, die in der Abzweigleitung (3) angeordnet ist, zur Absperrung der genannten Leitung (3), unter einem vorgegebenen Druck in dem oberen Abschnitt (2B) der Vorlaufleitung (2).

11. Regler (1) gemäß Anspruch 10, **dadurch gekennzeichnet, dass** der konische Zapfen (6A) des Absperrorgans (6) von einein zylindrischen Zapfen (6B) verlängert wird, der während der Verschiebung des Ventils (5) mit länglichen Führungsrippen (23), die auf der Innenwand der Abzweigleitung (3) angeordnet sind, zusammenarbeitet.

12. Regler (1) gemäß einem der Ansprüche 1 bis 11, **dadurch gekennzeichnet, dass** der Ventilkörper (5) ein hohler Körper ist, auf dem eine Führungsachse (13) gelagert ist, die in das Lager (9) der Wand der Vorlaufleitung (2) eingepresst ist.

13. Regler (1) gemäß einem der Ansprüche 1 bis 12, **dadurch gekennzeichnet, dass** das Ventil (5) von einer Schraubenfeder (8) belastet wird, die einerseits um die Ventilachse (5) und andererseits um die Achse einer Nabe (14), die von einem Stopfen (15) zum Schließen der Rohrleitung (3) getragen wird, gewickelt ist.

14. Regler (1) gemäß einem der Ansprüche 1 bis 13, **dadurch gekennzeichnet, dass** das Ventil (5) im Inneren eines Körpers montiert ist, der die Abzweigleitung (3), einen Eingang (E) der Vorlaufleitung (2), einen Ausgang (S) der Vorlaufleitung (2), amen Eingang (E) der Rückaufleitung (4) und einen Ausgang (S) der Rückaufleitung (4) umfasst, und alles dafür bestimmt ist, in die Vorlauf- und Rückaufleitungen eines Flüssigkeitszirkulationskreislaufs eingeführt zu werden, wie zum Beispiel einen Kühl- und/oder Heizkreislauf, der sich vor allem zwischen einem Verbrennungsmotor eines Fahrzeugs und einer Heiz- oder Kühlvorrichtung erstreckt und zwar so, dass ein einbaufertiger Regler entsteht.

## Claims

1. Automatic fluid delivery regulator (1) of a fluid circuit, such as a cooling and/or heating circuit, which extends in particular between an internal combustion engine of a vehicle and a heating or cooling device, the said regulator (1) comprising an outward pipe (2), a return pipe (4) and a branched pipe (3) which connects the outward pipe (2) to the return pipe (4), the regulator (1) additionally comprising a valve which is accommodated at least partially in the branched pipe (3), the said valve (5) comprising at least two shutter units (6, 7), one of which (6) is designed to shut at least partially the branched pipe (3), and the other (7) of which is designed to shut at least partially the section (2A) of the outward pipe downstream from the branched pipe (3), the shutter units (6, 7) which are integral in displacement with the valve body (5) are returned, generally by means of a resilient return unit (8), to a predetermined position, and are mobile simultaneously under the exclusive effect of a pressure in the upstream section (2B) of the outward pipe (2), which is greater than the predetermined pressure, the said shutter units (6, 7) giving rise, simultaneously with their displacement, one of them (6) to the creation or increase in the cross-section (S1) of passage of fluid into the branched pipe, and the other of them (7) to a reduction in the cross-section (S2) of passage of fluid into the downstream section (2A) of the outward pipe (2), **characterised in that**, below a predetermined threshold pressure in the upstream section (2B) of the outward pipe (2), the shutter unit (7) for the section (2A) of the outward pipe (2) downstream from the branched pipe (3) is accommodated at least partially, and preferably totally, in a bearing (9) in the wall of the outward pipe (2) formed by a reinforcement of the said wall, such as to release at least partially the cross-section of passage of the said outward pipe.

2. Regulator (1) according to claim 1, **characterised in that** the valve (5) has the general form of a axis which is coaxial to the branched pipe (3), this axis, which is loaded by a compression spring (8), being returned to a position in which one of its ends is accommodated in a bearing (9) provided in the wall of the outward pipe (2).

3. Regulator (1) according to claim 2, **characterised in that** the end of the axis which is accommodated in the said bearing (9) has a diameter which is larger than the rest of the valve body, and constitutes a cylindrical part which forms the shutter unit (7) of the downstream section (2A) of the outward pipe (2).

4. Regulator (1) according to any one of claims 1 to 3, **characterised in that** the shutter unit (6) for the branched pipe (3) shuts the said pipe (3) totally when the pressure in the outward pipe (2) is lower than the said predetermined threshold pressure.

5. Regulator (1) according to any one of claims 1 to 4, **characterised in that** the cross-section (S1) of passage which is delimited by the co-operation of the shutter unit (6) with the branched pipe (3) increases during the displacement of the valve (5) under the effect of an increase in the pressure in the upstream section (2B) of the outward pipe (2).

6. Regulator (1) according to any one of claims 1 to 5, **characterised in that** the increase in the cross-section (S1) of passage of the branched pipe (3) and the reduction in the cross-section (S2) of passage of the downstream section (2A) of the outward pipe (2) are directly dependent on the pressure which exists in the upstream section (2B) of the outward pipe (2), the said cross-sections (S1, S2) of passage increasing or decreasing respectively according to a linear preference variation.

7. Regulator (1) according to any one of claims 1 to 6, **characterised in that** the cross-sections (S1, S2) of passage of the branched pipe (3) and of the downstream section (2A) of the outward pipe (2) are selected in a correlated manner such as to maintain in the downstream section (2A) of the outward pipe (2) a delivery value which is lower than a predetermined threshold value, independently of the delivery in the upstream section (2B) of the outward pipe (2).

8. Regulator (1) according to any one of claims 1 to 7, **characterised in that** the downstream section (2A) of the outward pipe (2) is slightly offset axially relative to the axis of the upstream section (2B) of the outward pipe (2), to form in the wall of the outward pipe (2) a recess (10) allowing, during displacement of the valve (5), the shutter (7) of the outward pipe (2) to shut at least partially part of the downstream section (2A) of the outward pipe (2) before penetrating in the upstream section (2B) of the outward pipe (2).

9. Regulator (1) according to claim 8, **characterised in that** the downstream section (2A) of the outward pipe (2) has, at right-angles to the shutter (7), and extending along substantially half of the downstream section (2A) of the outward pipe (2), a frusto-conical part (11), the small base of which is on the shutter side (7), this frusto-conical part (11) being, during a displacement of the valve (5), shut totally by the shutter unit (7) of the outward pipe (2) before the latter penetrates in the upstream section (2B) of the said outward pipe (2).

10. Regulator (1) according to any one of claims 1 to 9, **characterised in that** the shutter unit (6) of the branched pipe (3) consists of a preferably conical support surface (6A) which is provided on the valve body (5), this conical support surface (6A) cooperating with a seat (12) provided in the branched pipe (3) in order to shut the said pipe (3) below a predetermined pressure in the upstream section (2B) of the outward pipe (2).

11. Regulator (1) according to claim 10, **characterised in that** the conical support surface (6A) of the shutter unit (6) is extended by a cylindrical support surface (6B) which, during the displacement of the valve (5) co-operates with longitudinal guide ribs (23) which are provided on the inner wall of the branched pipe (3) .

12. Regulator (1) according to any one of claims 1 to 11, **characterised in that** the valve body (5) is a hollow body which accommodates a guide axis (13) which is fitted in the bearing (9) of the wall of the outward pipe (2).

13. Regulator (1) according to any one of claims 1 to 12, **characterised in that** the valve (5) is loaded by a helical spring (8) which is wound firstly around the axis of the valve (5), and secondly around the axis of a hub (14) which is supported by a stopper (15) to close the channelling pipe (3).

14. Regulator (1) according to any one of claims 1 to 13, **characterised in that** the valve (5) is fitted inside a body comprising the said branched pipe (3), an intake (E) of the said outward pipe (2), an outlet (S) of the said outward pipe (2), an intake (E) of the said return pipe (4) and an outlet (S) of the said return pipe (4), the assembly being designed to be inserted on the outward and return pipes of a fluid circulation circuit, such as a cooling and/or heating circuit which extends in particular between an internal combustion engine of a vehicle and a heating or cooling device, such as to constitute a regulator which is ready to install.
